# EUROPEAN PATENT APPLICATION

(11) **EP 4 841 869 A1**
(43) Date of publication of application: **18.11.2026**
(21) Application number: 25176352.0
(22) Date of filing: 14.05.2025
(51) Int. Cl.: H02K 37/12, H02K 37/14

(54) **STEPPER MOTOR**

(71) Applicant: Eltorque AS, 7041 Trondheim (NO)
(72) Inventor: Zhang, Zhaoqiang, 7041 Trondheim (NO); Lin, Fengcheng, 7041 Trondheim (NO); Lu, Kechan, 7041 Trondheim (NO); Skarre Abrahamsen, Henrik, 7041 Trondheim (NO); Farstad, Jan Magnus, 7041 Trondheim (NO)
(74) Representative: Acapo Onsagers AS

(57) **Abstract**

The present invention relates to a two-phase permanent magnet stepper motor capable of delivering high torque and high efficiency at high speeds. The motor comprises a concentric stator and rotor arrangement, wherein the rotor includes a back iron and magnet arrays configured to generate multi-pole magnetic fields. The stator comprises two axially-arranged sub-stators, each comprising a laminated stator core and a single-phase winding. Two-phase operation is achieved by circumferentially offsetting one of the sub-stators or one of the magnet arrays by 90 electrical degrees relative to the other. Preferably, the motor further incorporates a hollow shaft, facilitating the passage of additional components through the motor's inner space and enabling compact system designs.

## Description

### 1 Field of the invention

The present invention relates to two-phase stepper motors, and more particularly, to two-phase permanent magnet stepper motors suitable for high-speed rotation and enabling compact system designs.

### 2 Background of the invention

Stepper motors convert electrical pulses into precise mechanical movements. They are widely used in applications requiring controlled, repeatable motion due to their ability to move in discrete steps. Each pulse sent to a stepper motor corresponds to a fixed angular increment of the motor shaft, enabling accurate positioning and speed control without the need for feedback systems such as encoders. Stepper motors provide a cost-effective solution for a wide range of industries, including manufacturing, medical device, and industrial automation.

Stepper motors come in various types, including hybrid stepper motors and claw-pole stepper motors. These two types are also regarded as the prior art relevant to this invention.

Hybrid stepper motors are available in different variants and some examples are presented in US2008030108A1 and US11456653B2. Typically, the stator of hybrid stepper motors is constructed from a stack of laminated steel and contains multiple main teeth with small teeth machined on the top of the main teeth; The rotor is made of two stacks of laminated steel with small teeth machined on the outer periphery and a cylindrical axially-magnetized permanent magnet sandwiched in between the two steel stacks. Hybrid stepper motors are known for their high torque output at low speeds and are normally rated with a rotational speed below 200 rpm. However, when the supply voltage of the motor drive is fixed, due to the large inductance and three-dimensional magnetic field, the torque of hybrid stepper motors drops dramatically as speed grows, resulting in low efficiency and thus not favoured for high-speed applications. In addition, hybrid stepper motors are known for manufacturing complexity.

Claw-pole stepper motors are characterized by a specific arrangement of claw-like structures that form the teeth of the stator, for example in NO174947B, EP1263115A2, and US7205697B2. The stator is typically made of solid steel or soft magnetic composite, leading to lower manufacturing costs and minimal use of material. Claw-pole stepper motors are known for high torque at low speed and are normally rated with a rotational speed of around 100 rpm. However, due to their large inductance, claw-pole stepper motors require a motor drive with a high power rating. As speed increases, the stator core losses grow substantially, leading to reduced efficiency and making this motor type unsuitable for high-speed applications. Additionally, the claw-pole design can produce cogging torque, which requires effective mitigation strategies.

Both hybrid stepper motors and claw-pole stepper motors face challenges in incorporating an inner hole with a large diameter. Doing so reduces the available volume for torque generation, resulting in larger motor sizes to achieve comparable performance.

### 3 Summary of the invention

The primary object of this invention is to provide a two-phase stepper motor capable of delivering high torque at high speeds, e.g., above 200 rpm and up to thousands of rpm, without necessitating an increase in the supply voltage of the motor drive. This performance surpasses the capabilities of existing two-phase hybrid and claw-pole stepper motors that are typically rated below 200 rpm. The ability to operate with the same motor drive offers significant cost advantages by eliminating the need for additional upgrades to the motor drive system.

Another object of this invention is to provide a stepper motor with high efficiency at high speeds. Conventional hybrid and claw-pole stepper motors suffer from significant core losses caused by the three-dimensional nature of their main magnetic field. This limitation reduces their efficiency at high speeds, rendering them impractical for such applications.

A further object of this invention is to provide a stepper motor featuring a hollow shaft. This design allows other components to pass through the motor's inner space, enabling the creation of compact and integrated systems. Conventional hybrid and claw-pole stepper motors are unsuitable for such a configuration, as increasing the size of the inner hole in these designs results in substantial torque reduction. For example, in actuator applications, there may be a rising stem that goes up and down. A motor with a hollow-shaft will allow the rising stem to pass the inner space of the hollow-shaft, resulting in a compact system. Otherwise, the motor will have to be arranged away from the path that the rising stem moves along to allow the rising stem to move freely up and down, leading to bulky systems.

Additionally, an object of this invention is to provide a low-inductance stepper motor. Reduced inductance confers several advantages, including a higher power factor, a lower reactive power demand, reduced voltage drop due to reactance, and more effective utilization of the supply voltage, particularly at high speeds. In contrast, hybrid and claw-pole stepper motors are characterized by high inductance, limiting their application primarily to low-speed operations.

A further object of this invention is to provide a stepper motor that is simple and cost-effective to manufacture. Hybrid stepper motors generally require precision machining to fabricate their stator and rotor cores, while high performance claw-pole stepper motors depend on soft magnetic composites, which are more expensive than laminated electrical steel. This invention seeks to provide a stepper motor design that minimizes the reliance on advanced machining techniques and eliminates the need for costly specialized materials, thereby reducing manufacturing complexity and expense.

A first embodiment of the invention is a two-phase permanent magnet stepper motor comprising a stator, a rotor, a gap between the stator and the rotor, a shaft, and a central axis wherein the stator, rotor, gap, and shaft are coaxially aligned with respect to the central axis, wherein the rotor comprises a back iron and a magnet arrangement comprising a magnet array, and wherein the magnet array comprises an equal number of permanent magnets magnetized toward the gap and permanent magnets magnetized outward away from the gap, and wherein the permanent magnets of magnet array are arranged to generate a magnetic field in the gap, and wherein the stator comprises two axially-arranged sub-stators, each including a stator core with a number of teeth and a plurality of coil, and wherein the stator core comprises axially laminated electrical steel sheets, and wherein each coil is wound around a respective tooth of the stator core, and wherein the plurality of coils of each of the two sub-stators are connected to form a winding for a respective of the two phases, wherein the phase difference of backEMFs at the two phases is 90 electrical degrees, and wherein the number of teeth in the stator core of each sub-stator is equal to the number of poles of magnet array, and wherein the stator cores of sub-stators are concentrically aligned with the magnet array.

Optionally, the shaft comprises an opening through the shaft along its axial centreline, and the motor comprises an opening through the motor along the central axis, and the shaft being arranged therein. Optionally, the stator is arranged between the rotor and the shaft. Optionally, the rotor is arranged between the stator and the shaft.

Optionally, the magnet array comprises a magnet arrangement comprised by two axially-arranged magnet arrays, wherein each magnet array comprises an equal number of permanent magnets magnetized toward the gap and permanent magnets magnetized outward away from the gap, and wherein the permanent magnets within each magnet array are arranged to generate a magnetic field in the gap, and wherein the number of teeth in the stator core of each sub-stator is equal to the number of poles in each magnet array, and wherein the stator core of each sub-stator is concentrically aligned with the respective magnet array.

Optionally, the magnet arrangement is comprised by a single axially-arranged magnet array, wherein the single axially-arranged magnet array comprises an equal number of permanent magnets magnetized towards the gap and permanent magnets magnetized away from the gap, wherein the single axially-arranged magnet array is arranged to generate a magnetic field in the gap, wherein the number of teeth in the stator core of each sub-stator is equal to the number of poles in the single axially-arranged magnet array, and wherein the stator cores of sub-stators are concentrically aligned with the single axially-arranged magnet array.

Optionally, the permanent magnets of identical polarity from different magnet arrays are axially aligned, and the teeth of two sub-stators are circumferentially offset by 90 electrical degrees. Optionally, the teeth of the two sub-stators are aligned, and the two magnet arrays are circumferentially offset 90 electrical degrees.

Optionally, the permanent magnets on the rotor are either surface-mounted on or embedded within the back iron. Optionally, the permanent magnets and/or the stator core being are skewed.

### 4 Description of the invention

A two-phase permanent magnet stepper motor is defined by the technical features of claim 1. Preferable features of the motor are described in the dependent claims.

The two-phase permanent magnet stepper motor comprises a stator, a rotor, a gap between the stator and the rotor, a shaft, bearings, and auxiliary components to facilitate assembly. The stator and rotor are arranged concentrically, creating a multipole magnetic field in the gap between them. Whether to place the rotor outside or inside the stator, it is dependent on the specific design requirements.

The stator includes two sub-stators arranged along the axial direction, each corresponding to one phase. Mechanically, the two sub-stators can be identical. Each sub-stator comprises a stator core, a single-phase winding, and slot insulations between the stator core and winding. The stator core is constructed from laminating electric steel sheets in the axial direction. Each stator tooth is wound with wires in a specified number of turns, forming a coil. The wounding direction alternates between adjacent teeth, ensuring that when energized, the magnetic fields of adjacent teeth have opposite polarities. The winding comprises tooth coils, which can be connected in series, in parallel, or in a combination of both-partially in series and then in parallel. The wires are coated with enamel for primary electrical insulation, and additional slot insulation is placed between each tooth and its respective coil.

The rotor comprises two magnet arrays and a rotor back iron. The rotor back iron can be constructed from either solid steel or laminated electrical steel sheets. Each magnet array includes an even number of permanent magnets arranged circumferentially on the rotor back iron. These magnets are magnetized either toward the gap or away from the gap, thereby generating multiple magnetic poles with adjacent poles having opposite polarities. The permanent magnets are mounted on the rotor back iron, either surface-mounted or embedded within it. The two magnet arrays are arranged axially.

To achieve a two-phase motor operation, the phase difference of backEMFs at the two motor phases should be 90 electrical degrees. Preferably, this is realised by circumferentially offsetting one sub-stator by 90 electrical degrees relative to the other, while the magnet arrays remain axially aligned. In this case, the magnets of identical polarity from the two arrays are preferably aligned in the axial direction and may be unified into a single component. Alternatively, the 90-degrees phase difference can be accomplished by circumferentially offsetting one magnet array by 90 electrical degrees relative to the other, with the sub-stators axially aligned.

Contrary to the operating principles of hybrid stepper motors and claw-pole stepper motors, this motor can be designed with an inner hole without reducing the torque. Therefore, the shaft of the motor is preferably to be hollow, facilitating other part to pass through the inner space of the motor and enabling compact system design.

Preferably, the axial distance between the sub-stators and magnet arrays is minimized to reduce size without causing mechanical interference between the end windings of the two sub-stators or significant magnetic flux coupling between phases.

The motor preferably features a high number of magnetic poles to increase driving torque and reduce cogging torque. Magnetic pole shaping (e.g., contouring of surface-mounted magnets at the stator side) or tooth surface shaping can be employed to optimize torque characteristics.

For enhanced mechanical strength and improved thermal management, the stator or rotor may be partially or fully encapsulated in composite materials.

Additionally, cooling fins can be integrated into the rotor support structures to enhance heat dissipation during operation.

### 5 Figures

Embodiments of the present invention will be described in the following sections, by way of example only, with reference to the following figures, wherein:
Fig. 1 schematically illustrates the cut view of a stepper motor as the first embodiment according to the invention. In this embodiment, the stator is arranged between the rotor and the shaft, and the two sub-stators (Fig. 2) are circumferentially offset by 90 electrical degrees.
Fig. 2 schematically illustrates the three-dimensional and cut views of the stator for the first embodiment in Fig. 1.
Fig. 3 schematically illustrates the rotor's three-dimensional and front views for the first embodiment in Fig. 1. In this rotor, the two magnet arrays are aligned in the axial direction.
Fig. 4 schematically illustrates an alternative rotor for the first embodiment in Fig. 1. In this rotor, the permanent magnets of the two magnet arrays with the same polarity are made into a single magnet piece.
Fig. 5 schematically illustrates the sub-stator's three-dimensional, front, and section views.
Fig. 6 schematically illustrates the stator for a second embodiment. In this embodiment, the stator is arranged between the rotor and the shaft, and the two sub-stators are aligned in the axial direction.
Fig. 7 schematically illustrates the rotor's three-dimensional and front views for the second embodiment in Fig. 6. In this rotor, the two magnet arrays are circumferentially offset by 90 electrical degrees with respect to each other.
Fig. 8 schematically illustrates the full and cut views of a third embodiment where the rotor is arranged between the stator and the shaft.
Fig. 9 schematically illustrates the cut view of the stator for the third embodiment in Fig. 8. In this stator, the two sub-stators are circumferentially offset by 90 electrical degrees.
Fig. 10 schematically illustrates the rotor's three-dimensional and front views for the third embodiment in Fig. 8.
Fig. 11 schematically illustrates the three-dimensional, front, and section views of the sub-stators for the third embodiment in Fig. 8.

### 6 List of reference numbers in the figures

The following reference numbers refer to the drawings:

| | |
|---|---|
| 1 | Stepper motor |
| 2 | Shaft |
| 3 | Bearings |
| 4 | Circlip |
| 5 | Bolts |
| 6 | Gap between stator 20 and rotor 30 |
| 9 | Central axis of motor 1, stator 20, rotor 30, and shaft 2 |
| 20 | Stator |
| 21 | Spacer between 100 and 21 |
| 22 | Spacer between 100 and 150 |
| 23 | Spacer between 400 and 450 |
| 30 | Rotor |
| 31 | Rotor supporting structure |
| 32, 33, 34 | Magnet arrays |
| 35, 311 | Rotor back iron |
| 100, 150, 400, 450 | Sub-stators |
| 103 | Grooves for mounting 120 to 202 |
| 110 | Coils for sub-stator |
| 120, 400 | Stator core for sub-stator |
| 121, 421 | Yoke of stator core for sub-stator |
| 122, 422 | Teeth of stator core for sub-stator |
| 200 | Stator supporting structure |
| 201 | The first structural part of 200 |
| 201A | Mounting slots and holes |
| 201B | Cutout for wire leads |
| 202 | The second structural part of 200 |
| 312 | Mounting plate of the rotor |
| 312A | Bolt holes for fastening the shaft 2 to rotor 30 |
| 321, 331, 341 | Permanent magnets magnetized toward the gap |
| 322, 332, 342 | Permanent magnets magnetized away from the gap |
| 501 | The first end cap |
| 501A | Bolt holes for fastening the motor 1 to external structures |
| 502 | The second end cap |
| 502A | Bolt holes for fastening the two end caps, two sub-stators, and the spacer 23 together |

### 7 Description of embodiments of the invention

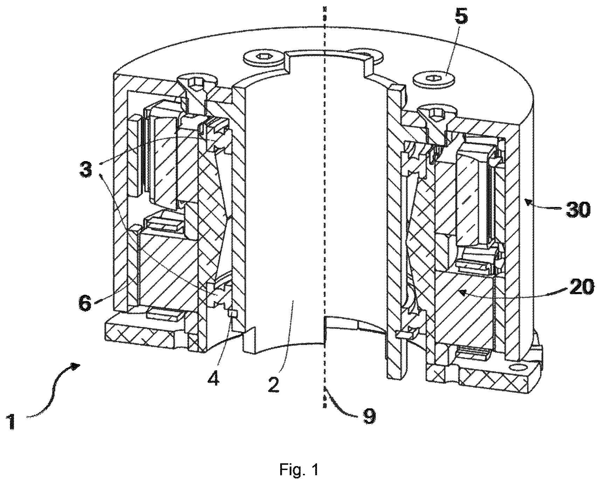

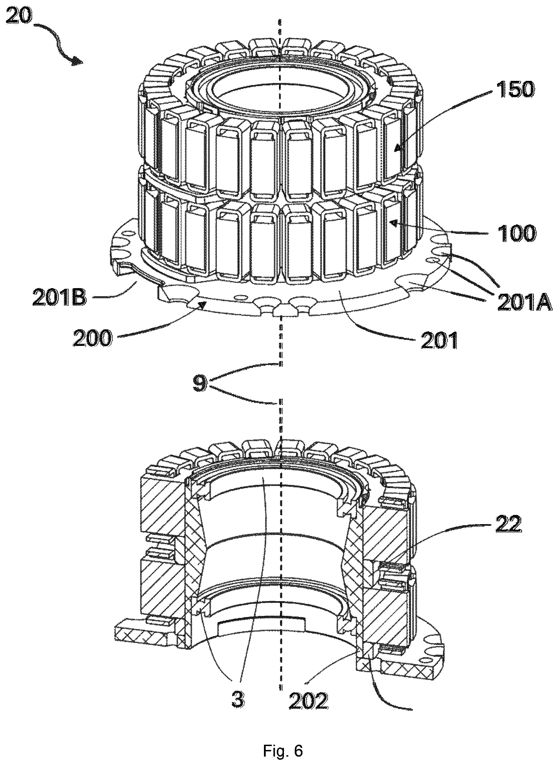

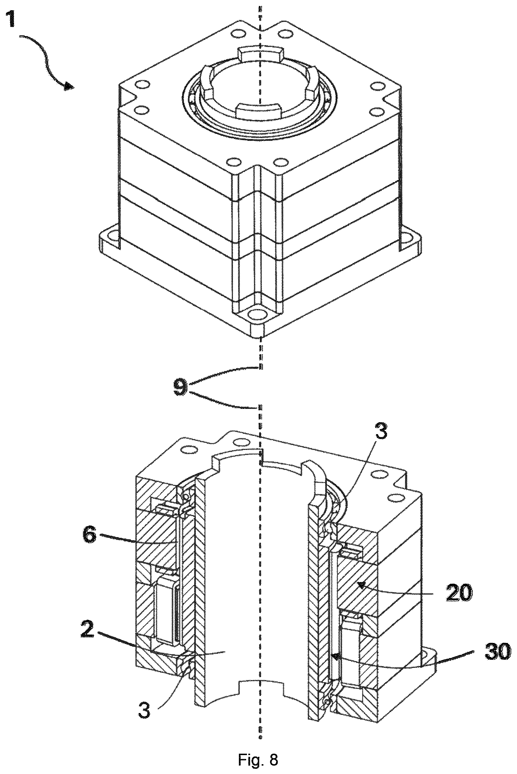

Figs. 1-11 schematically illustrate three embodiments in the preference sequence. Figs. 1-5 illustrate the first embodiment, while Figs. 6-7 illustrate the second and Figs. 8-11 illustrate the third.

Reference is now made to Fig. 1, which schematically illustrates a stepper motor 1 as an embodiment of this invention. Stepper motor 1 comprises a stator 20, a rotor 30, a gap 6 between stator 20 and rotor 30, a shaft 2, and a central axis 9. The axis 9 serves as the common central axis for all these components, including the motor 1 itself, the stator 20, the rotor 30, the gap 6, and the shaft 2. The stator 20 is attached to shaft 2 through bearings 3 and circlip 4. The shaft 2 is attached to the rotor 30 by bolts 5. Preferably, the shaft 2 is hollow with a large inner diameter. Rotor 30 is concentrically arranged outside the stator 20. Fig. 1 is a cut view of motor 1, while more details about the stator 20 and the rotor 30 are shown in the following figures.

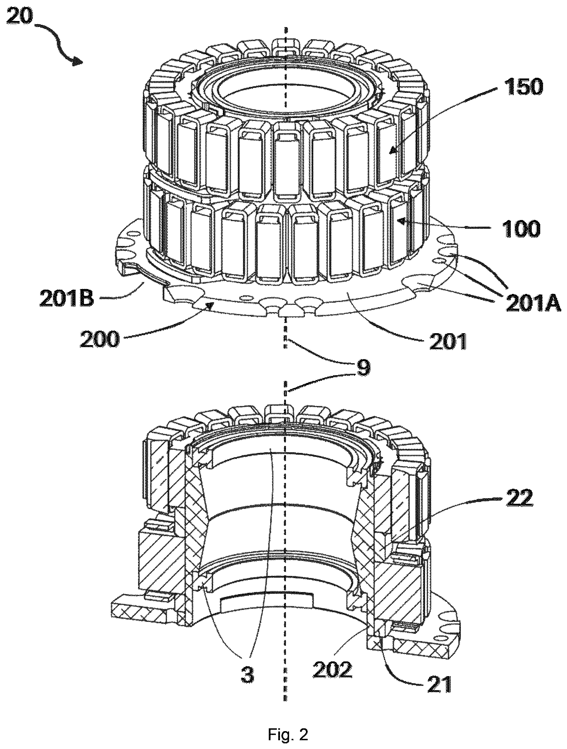

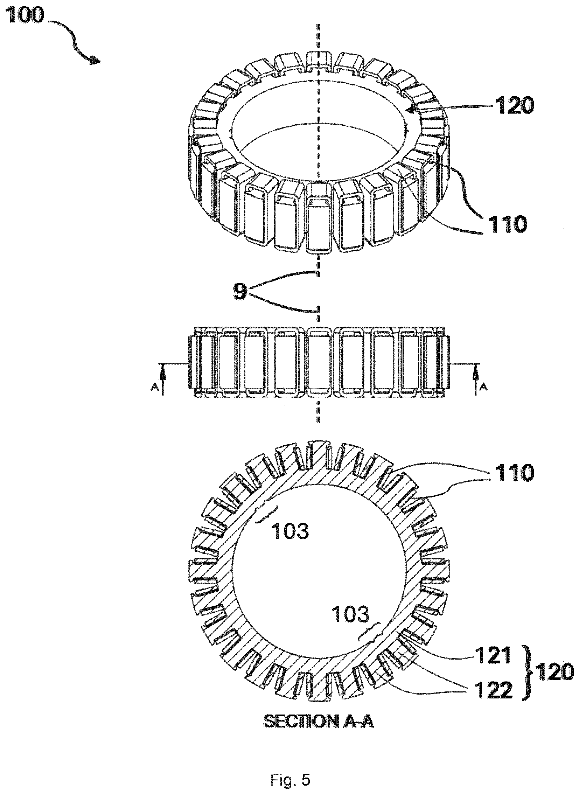

Reference is now made to Fig. 2, which schematically illustrates the stator 20. The stator 20 primarily comprises, in the axial direction, a structural part 200, a spacer 21, the first sub-stator 100, a spacer 22, and the second sub-stator 150. The axis 9 serves as the common central axis for all these components, including the stator 20 itself, the two sub-stators (100 and 150), the two spacers (21 and 22), and the structural part 200. The sub-stators 100 and 150 are structurally identical, and details about the first sub-stator 100 are shown in Fig. 5. Structure part 200 includes the first structure part 201 and the second structure part 202. The first sub-stator 100 is attached to the exterior surface of 202 and is axially spaced from 201 by a spacer 21. Spacer 21 ensures there is no mechanical interference between 100 and 201. Similarly, the second sub-stator 150 is attached to the exterior surface of 202 and is axially spaced from 100 by a spacer 22. Spacer 22 ensures there is no mechanical interference between 100 and 150. Furthermore, the second sub-stator 150 is circumferentially offset by 90 electrical degrees relative to the first sub-stator 100. In this way, the motor can be operated with a two-phase power input, namely, the stepper motor 1 is a two-phase motor. The first structural part 201 includes slots and holes 201A, which facilitate the fastening of motor 1 to an external structure. The external structure is not shown in the figure. Additionally, the cutout 201B is machined into the first structural part 201 to provide clearance for winding entry. Both structural parts 201 and 202 are made with a large hole inside to accommodate the installation of large-diameter bearings 3. Typically, the structural parts 201 and 202 are fabricated from metal, such as steel or aluminium. Preferably, structural parts 201 and 202 are initially machined separately and subsequently integrated through mechanical methods like welding, although other methods may also be used. Spacers 21 and 22 can be made of metals or non-metallic materials. The structural part 202 is subject to significant dynamic forces during motor operation, therefore, its mechanical rigidity is critical for the reliability of motor 1. One preferred configuration, as shown in Fig. 2, involves the second structural part 202 having an uneven radial thickness. At the two ends where the second structural part 202 meets bearings 3, the radial thickness is the smallest, while the middle section along the axial length is designed with the largest radial thickness to enhance rigidity. The second structural part 202 is further designed with keys that can be coupled to the grooves 103 shown in Fig. 5, allowing sub-stators 100 and 105 to be securely fastened to 202.

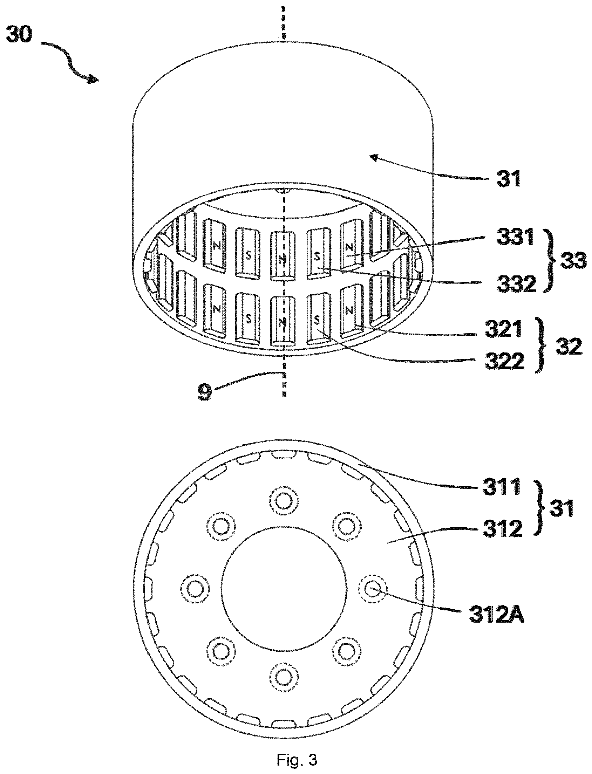

Reference is now made to Fig. 3, which schematically illustrates the rotor 30. The rotor 30 comprises a structural part 31, a first magnet array 32, and a second magnet array 33. The axis 9 serves as the common central axis for all these components, including the rotor 30 itself, the structural part 31, and the two magnet arrays (32 and 33). Rotor structural part 31 comprises two cylindrical components: rotor back iron 311 and rotor mounting plate 312. Rotor mounting plate 312 is equipped with bolt holes 312A to facilitate the attachment of shaft 2 to 312 using bolts 5. The first magnet array 32 comprises 24 permanent magnets, including 12 magnets 321 magnetized toward the gap 6, and 12 magnets 322 magnetized away from the gap 6. Magnets 321 and 322 are alternately positioned so that adjacent magnets have opposite polarities. Similarly, the second magnet array 33 also comprises 24 permanent magnets, including 12 magnets 331 magnetized toward the gap 6, and 12 magnets 332 magnetized away from the gap 6. Magnets 331 and 332 are evenly alternated along the inner surface of rotor back iron 311 to ensure that adjacent magnets have opposite polarities. The number of magnets in each magnet array, 32 and 33, is equal to the number of teeth in each sub-stator, 100 and 150, facilitating a two-phase motor operation with two sub-stators. All magnets 321, 322, 331, and 332 have an arc-shaped outer surface and are glued to the inner surface of rotor back iron 311. In the axial direction, the center of each magnet in the first magnet array 32 is aligned with the center of each tooth of the first sub-stator 100; similarly, the center of each magnet in the second magnet array 33 is aligned with the center of each tooth of the second sub-stator 150. Furthermore, magnets of the same polarity, 321 and 331, or 322 and 332, are aligned along the axial direction, ensuring the least flux leakage between magnet arrays.

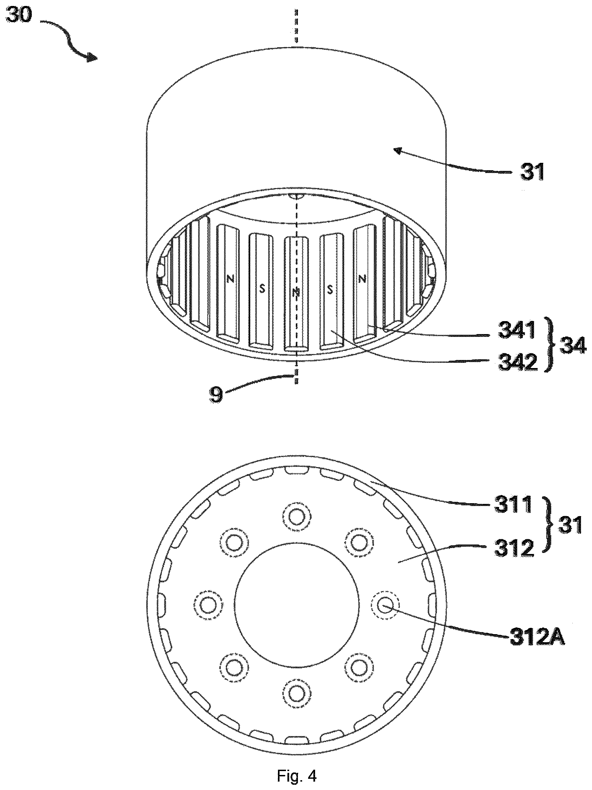

Reference is now made to Fig. 4, which illustrates an alternative configuration of the rotor 30, as compared to the rotor depicted in Fig. 3. Instead of using two separate magnet arrays, the rotor 30 shown in Fig. 4 employs a single array of elongated magnets, designated as magnet array 34. The magnet array 34 comprises 12 magnets 341 magnetized toward the gap 6, and 12 magnets 342 magnetized away from the gap 6. Magnets 341 and 342 are alternately arranged along the inner surface of rotor back iron 311, such that adjacent magnets exhibit opposite polarities. The axis 9 serves as the common central axis for all these components, including the rotor 30 itself, the structural part 31, and the magnet array 34. The number of magnets in magnet array 34, is equal to the number of teeth in each sub-stator, 100 and 150, facilitating a two-phase motor operation with two sub-stators. All magnets 341 and 342 feature an arc-shaped outer surface and are glued to the inner surface of rotor back iron 311. Preferably, the surfaces of magnets 341 and 342, facing towards the stator 20, are modified to enhance motor performances, such as reducing cogging torque. In the axial direction, the center of each magnet of magnet array 34 is aligned with the center of sub-stators 100 and 150.

Reference is now made to Fig. 5, which illustrates the first sub-stator 100. The first sub-stator 100 comprises a plurality of coils 110 and a stator core 120. The axis 9 serves as the common central axis for all these components, including the sub-stator 100 itself, the plurality of coils 110, and the stator core 120. The plurality of coils 110 comprise a group of individual coils, each wound around a respective tooth of the stator core 120 with a specified number of turns. The coils 110 may be connected in series, in parallel, or in a combination of series and parallel connections to form the desired winding configuration. The stator core 120 comprises a stator core yoke 121 and a series of teeth 122. Typically, the stator core 120 is made of electrical steel sheets laminated in the axial direction. The stator core 120 is designed in a ring shape with a large inner diameter and is fastened to the second supporting structure 202 via grooves 103. The first sub-stator 100 serves as a basic component for both the first embodiment shown in Figs. 1-3 and the second embodiment shown in following Figs. 6-7. The second sub-stator 150, shown in Figs. 1-2, is structurally identical to the first sub-stator 100 but is circumferentially offset by 90 electrical degrees relative to the first sub-stator 100.

Reference is now made to Fig. 6, which illustrates the stator of the second embodiment. The primary difference between Fig. 6 and Fig. 2 lies in the relative positioning of the second sub-stator 150 relative to the first sub-stator 100. In Fig. 6, the second sub-stator 150 is structurally identical to the first sub-stator and is axially aligned with the first sub-stator 100.

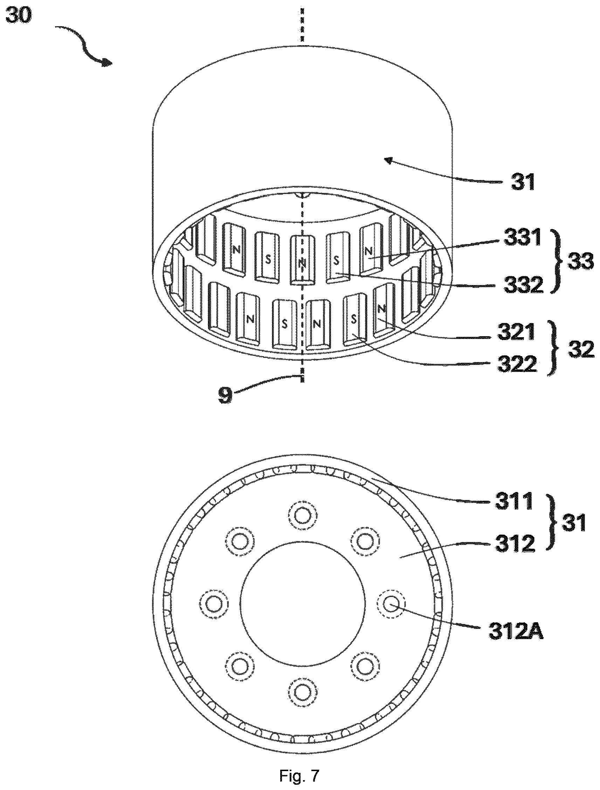

Reference is now made to Fig. 7, which illustrates the rotor of the second embodiment. The primary difference between Fig. 7 and Fig. 3 is the relative positioning of magnet array 32 relative to the magnet array 33. In Fig. 7, the magnet array 32 is circumferentially offset by 90 electrical degrees with respect to magnet array 33.

Reference is now made to Fig. 8, which schematically illustrates a stepper motor 1, representing the third embodiment of the present invention. The stepper motor 1 comprises a stator 20, a rotor 30, a gap 6 between the stator 20 and the rotor 30, a shaft 2, and a central axis 9. The axis 9 serves as the common central axis for all these components, including the motor 1 itself, the stator 20, the rotor 30, the gap 6, and the shaft 2. The stator 20 and the rotor 30 are coupled via shaft 2 and bearings 3, with the rotor 30 being concentrically arranged inside the stator 20 and outside the shaft 2. The shaft 2 is affixed to the rotor 30 by interference fit. Preferably, the shaft 2 is hollow with a large inner diameter. Further structural and functional details pertaining to the stator 20 and the rotor 30 in this embodiment are depicted in the subsequent figures.

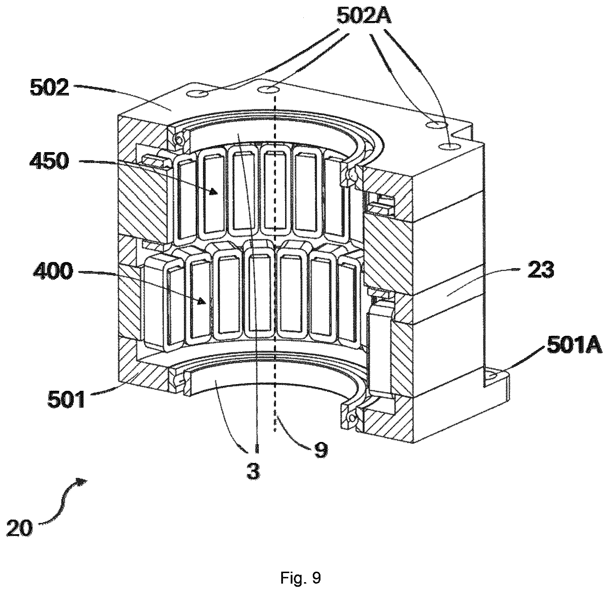

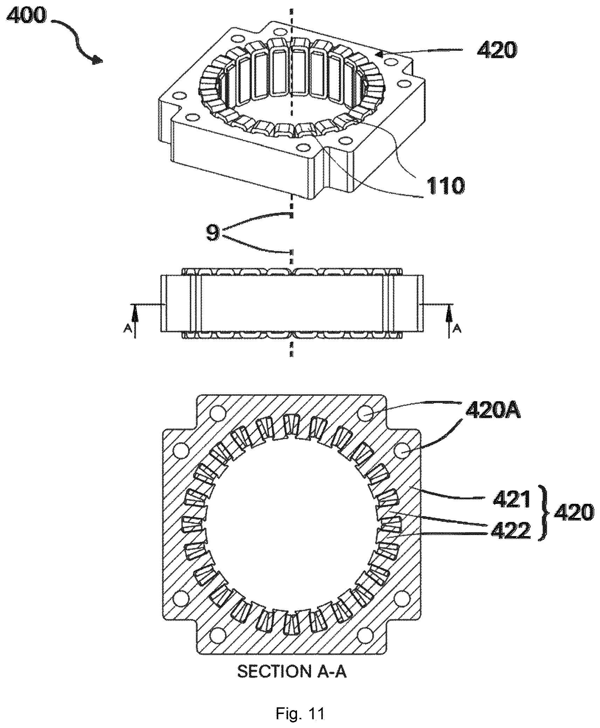

Reference is now made to Fig. 9, which schematically illustrates the stator 20 for the third embodiment depicted in Fig. 8. The stator 20 primarily comprises, in the axial direction, a first end cap 501, a first sub-stator 400, a spacer 23, a second sub-stator 450, and a second end cap 502. The axis 9 serves as the common central axis for all these components, including the stator 20 itself, the two sub-stators (100 and 150), the two spacers (21 and 22), and the structural part 200. The second end cap 502 is provided with bolt holes 502A; similarly, each of the other components, namely the first end cap 501, the first sub-stator 400, the second sub-stator 450, and the spacer 23, includes corresponding bolt holes (not shown in Fig. 9) that align with the bolt holes 502A, thereby enabling the mechanical fastening of all said components 501, 400, 23, 450, and 502 along the axial direction. The first end cap 501 further includes bolt holes 501A for securing the motor to external structures (not shown in Fig. 9). The first sub-stator 400 is fastened to the first end cap 501 and the spacer 23, and is axially spaced apart from the second sub-stator 450 by the spacer 23. The spacer 23 ensures that no mechanical interference occurs between the first sub-stator 400 and the second sub-stator 450. The second sub-stator 450 is fastened to the spacer 23 and the second end cap 502. The first sub-stator 400 and the second sub-stator 450 are structurally identical, with detailed features of the first sub-stator 400 illustrated in Fig. 11. Additionally, the second sub-stator 450 is circumferentially offset by 90 electrical degrees relative to the first sub-stator 400, enabling the motor to operate with a two-phase power input. Each of the components 501, 400, 450, 23, and 502 is provided with a central bore of sufficient diameter to accommodate the installation of large-diameter bearings 3, which further facilitate the integration of the hollow shaft 2. Typically, the end caps 501 and 502 are fabricated from metallic materials, such as steel or aluminum, while the spacer 23 may be constructed from either metallic or non-metallic materials.

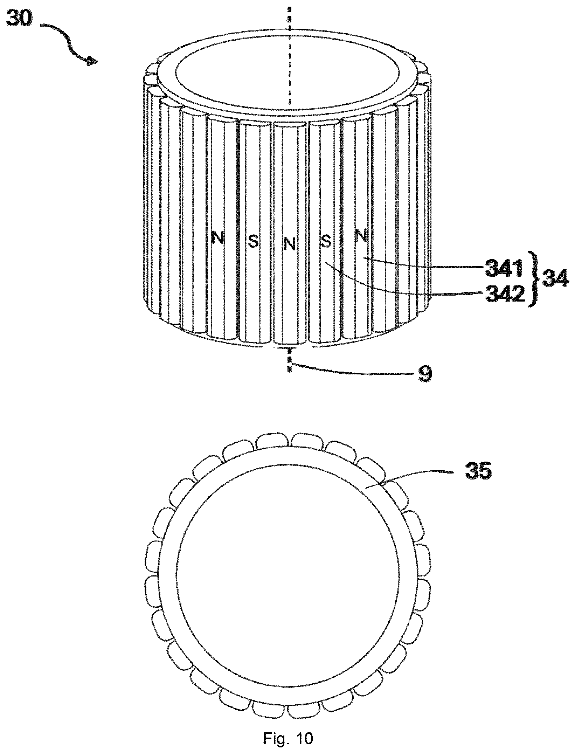

Reference is now made to Fig. 10, which illustrates a configuration of the rotor 30 for the third embodiment depicted in Fig. 8. Building upon a configuration similar to that shown in Fig. 4, the rotor 30 in Fig. 10 incorporates a single array of elongated magnets 34, comprising 12 magnets 341 magnetized toward the gap 6, and 12 magnets 342 magnetized away the gap 6. These magnets are alternately arranged along the outer surface of a rotor back iron 35, such that adjacent magnets exhibit opposite magnetic polarities. The axis 9 serves as the common central axis for all these components, including the rotor 30 itself, the structural part 35, and the magnet array 34. The number of magnets in magnet array 34 is equal to the number of teeth in each sub-stator, 400 and 450, facilitating a two-phase motor operation with two sub-stators. Each of the magnets 341 and 342 is characterized by an arc-shaped inner surface and is affixed to the outer surface of the rotor back iron 35 via an adhesive. Preferably, the surfaces of the magnets 341 and 342 that face toward the stator 20 are modified to enhance motor performance, such as by reducing cogging torque. In the axial direction, the center of each magnet within the magnet array 34 is aligned with the center of the sub-stators 400 and 450. The rotor back iron 35 may be constructed from solid steel or from electrical steel sheets laminated in the axial direction. As illustrated in Fig. 8, a shaft 2 is mounted to the interior of the rotor back iron 35.

Reference is now made to Fig. 11, which illustrates the first sub-stator 400 for the third embodiment depicted in Fig. 8. The first sub-stator 400 comprises a plurality of coils 110 and a stator core 420. The axis 9 serves as the common central axis for all these components, including the sub-stator 400 itself, the plurality of coils 110, and the stator core 420. The plurality of coils 110 include a group of individual coils, each wound around a respective tooth of the stator core 420 with a predetermined number of turns. The coils 110 may be interconnected in series, in parallel, or in a combination of series and parallel configurations to achieve the desired winding arrangement. The stator core 420 includes a stator core yoke 421 and a plurality of inwardly protruding teeth 422. Typically, the stator core 420 is fabricated from electrical steel sheets laminated in the axial direction. The first sub-stator 400 functions as a basic component of the third embodiment illustrated in Fig. 8. The second sub-stator 450, shown in Figs. 8-9, is structurally identical to the first sub-stator 400 but is circumferentially offset by 90 electrical degrees relative to the first sub-stator 400.

## Claims

1. A two-phase permanent magnet stepper motor (1) comprising a stator (20), a rotor (30), a gap (6) between the stator (20) and the rotor (30), a shaft (2), and a central axis (9),
wherein the stator (20), rotor (30), gap (6), and shaft (2) are coaxially aligned with respect to the central axis (9),
wherein the rotor (30) comprises a back iron (311) and a magnet arrangement comprising a magnet array (32, 33, 34),
wherein the magnet array (32, 33, 34) comprises an equal number of permanent magnets (321, 331, 341) magnetized toward the gap (6) and permanent magnets (322, 332, 342) magnetized away from the gap (6),
wherein the permanent magnets of magnet array (32, 33, 34) are arranged to generate a magnetic field in the gap (6),
wherein the stator (20) comprises two axially-arranged sub-stators (100 and 150, 400 and 450), each including a stator core (120, 420) with a number of teeth (122, 422) and a plurality of coils (110),
wherein the stator core (120, 420) comprises axially laminated electrical steel sheets,
wherein each coil (110) is wound around a respective tooth (122, 422) of the stator core (120, 420),
wherein the plurality of coils (110) of each of the two sub-stators (100, 150, 400, 450) are connected to form a winding for a respective of the two phases,
wherein the phase difference of backEMFs at the two phases is 90 electrical degrees,
wherein the number of teeth (122, 422) in the stator core (120, 420) of each sub-stator (100, 150, 400, 450) is equal to the number of poles of magnet array (32, 33, 34), and
wherein the stator cores (120, 420) of sub-stators (100, 150, 400, 450) are concentrically aligned with the magnet array (32, 33, 34).

2. A stepper motor (1) according to claim 1, where the shaft (2) comprises an opening through the shaft (2) along its axial centreline, and the motor (1) comprising an opening through the motor (1) along the central axis (9), and the shaft (2) being arranged therein.

3. A stepper motor (1) according to claim 1 or 2, where the stator (20) is arranged between the rotor (30) and the shaft (2).

4. A stepper motor (1) according to claim 1 or 2, where the rotor (30) is arranged between the stator (20) and the shaft (2).

5. A stepper motor (1) according to one of the claims 1 to 4, where the magnet arrangement is comprised by two axially-arranged magnet arrays (32, 33), and
wherein each magnet array (32, 33) comprises an equal number of permanent magnets (321, 331) magnetized toward the gap (6) and permanent magnets (322, 332) magnetized away from the gap (6),
wherein the permanent magnets within each magnet array (32, 33) are arranged to generate a magnetic field in the gap (6),
wherein the number of teeth (122, 422) in the stator core (120, 420) of each sub-stator (100, 150, 400, 450) is equal to the number of poles in each magnet array (32, 33), and
wherein the stator core (120, 420) of each sub-stator (100, 150, 400, 450) is concentrically aligned with the respective magnet array (32, 33).

6. A stepper motor (1) according to one of the claims 1 to 4, where the magnet arrangement is comprised by a single axially-arranged magnet array (34), and
wherein the single axially-arranged magnet array (34) comprises an equal number of permanent magnets (341) magnetized towards the gap (6) and permanent magnets (342) magnetized away from the gap (6),
wherein the single axially-arranged magnet array (34) is arranged to generate a magnetic field in the gap (6),
wherein the number of teeth (122, 422) in the stator core (120, 420) of each sub-stator (100, 150, 400, 450) is equal to the number of poles in the single axially-arranged magnet array (34), and
wherein the stator cores (120, 420) of sub-stators (100, 150, 400, 450) are concentrically aligned with the single axially-arranged magnet array (34).

7. A stepper motor (1) according to claim 5, where the permanent magnets (321, 322, 331, 332) of identical polarity from different magnet arrays (32, 33) are axially aligned, and the teeth (122, 422) of two sub-stators (100 and 150, 400 and 450) are circumferentially offset by 90 electrical degrees.

8. A stepper motor (1) according to claim 5, where the teeth (122, 422) of the two sub-stators (100 and 150, 400 and 450) are aligned, and the two magnet arrays (32, 33) are circumferentially offset 90 electrical degrees.

9. A stepper motor (1) according to one of the claims above, where the permanent magnets (321, 322, 331, 332, 341, 342) on the rotor (30) are either surface-mounted on or embedded within the back iron (311, 35).

10. A stepper motor (1) according to one of the claims above, where the permanent magnets (321, 322, 331, 332, 341, 342) and/or the stator core (120, 420) are skewed.
